# EUROPEAN PATENT APPLICATION

(11) **EP 4 550 562 A1**
(43) Date of publication of application: **07.05.2025**
(21) Application number: 23830955.3
(22) Date of filing: 01.06.2023
(51) Int. Cl.: H01M 50/503, H01M 50/213, H01M 50/291, H01M 50/342, H01M 50/505, H01M 50/509, H01M 50/516, H01M 50/526, H01M 50/548

(54) **BATTERY PACK**

(30) Priority: 30.06.2022 JP 2022105926
(71) Applicant: Panasonic Energy Co., Ltd., Osaka 570-8511 (JP)
(72) Inventor: NAMURA, Takashi, Kadoma-shi, Osaka 571-0057 (JP); SUZUKI, Shinji, Kadoma-shi, Osaka 571-0057 (JP); YAMAGAMI, Yasuhiro, Kadoma-shi, Osaka 571-0057 (JP)
(74) Representative: Novagraaf International SA
(86) International application number: PCT/JP2023/020416
(87) International publication number: WO 2024/004505

(57) **Abstract**

A battery pack includes a plurality of secondary battery cells arranged in parallel to each other in a longitudinal direction, each of the plurality of secondary battery cells including end surface electrodes each on both ends, at least one of the end surface electrodes being a first electrode including a safety valve, a battery holder for holding the plurality of secondary battery cells, a lead plate with conductivity for connecting the end surface electrodes of the secondary battery cells adjacent to each other, and an insulating plate with insulation property for covering a surface of the lead plate. The lead plate includes a lead opening window between the first electrodes of the adjacent secondary battery cells, and the insulating plate includes an insulation opening window in a position corresponding to the lead opening window.

## Description

### Technical Field

The present disclosure relates to a battery pack.

### Background Art

A battery pack including a large number of secondary battery cells connected in series or parallel is used as a power source for portable electric devices such as portable speakers, electric cleaners, and power tools, or as a backup power source for servers used for stationary power storage, as power source for homes, businesses, and factories, and further as electric power sources for driving assist bicycles, driving power sources for electric carts, electric scooters, or vehicles such as hybrid cars and electric cars, and the like. In most of these battery packs, a large number of secondary battery cells are held by a battery holder in a state in which secondary battery cells are adjacent to each other, and adjacent secondary battery cells are connected to each other by welding with a plate-shaped lead plate (see, for example, Patent Document 1).

Lithium-ion secondary batteries are generally used as the secondary battery cells used in such battery packs, but lithium-ion secondary battery cells may cause unsafe events such as smoking and ignition due to some abnormalities. For this reason, a safety valve is provided on an end surface where the electrode of a lithium-ion secondary battery cell is formed (for example, a positive electrode side end surface). The safety valve is configured to be opened to release a high-pressure gas inside to the outside when the internal pressure of an outer covering can of the secondary battery cell becomes high. However, if an unsafe event occurs in one of the secondary battery cells, emissions such as high temperature gas, flame, and electrolyte, released from the safety valve of the secondary battery cell may move through the lead plate to other adjacent secondary battery cells, and the other secondary battery cells may be damaged and catch fire.

### Citation List

### Patent Literature

[PTL 1] Japanese Unexamined Patent Application, Publication No. 2012-033464

### SUMMARY OF THE INVENTION

One object of the present disclosure is to provide a battery pack in which adjacent secondary battery cells are connected to each other by a lead plate, wherein even when an abnormality occurs in one of the battery cells, a damage to other adjacent secondary battery cells is suppressed.

A battery pack according to one embodiment of the present invention includes a plurality of secondary battery cells arranged in parallel to each other in a longitudinal direction, each of the plurality of secondary battery cells including end surface electrodes each on both ends, at least one of the end surface electrodes being a first electrode including a safety valve; a battery holder for holding the plurality of secondary battery cells; a lead plate with conductivity for connecting the end surface electrodes of the secondary battery cells adjacent to each other; and an insulating plate with insulation property for covering a surface of the lead plate, wherein the lead plate includes lead opening windows each formed between the first electrodes in the secondary battery cells adjacent to each other, and the insulating plate includes insulation opening windows formed in positions corresponding to the lead opening windows.

With the battery pack according to one embodiment of the present invention, the lead opening windows are respectively provided between the first electrodes in the adjacent secondary battery cells instead of completely closing by the lead plate. Thus, even if any one of the secondary battery cells releases emissions such as high-temperature gas due to abnormality, by releasing these emissions to the outside from the open space, it is possible to reduce a situation in which other adjacent secondary battery cells are adversely affected.

### BRIEF DESCRIPTION OF THE DRAWINGS

FIG. 1 is an external perspective view showing a battery pack according to one exemplary embodiment of the present invention.
FIG. 2 is a vertical sectional view of the battery pack of FIG. 1 taken along line II-II.
FIG. 3 is a perspective view showing a manufacturing step of the battery pack of FIG. 1.
FIG. 4 is an exploded perspective view of a battery assembly of the battery pack of FIG. 3.
FIG. 5 is an exploded perspective view of the battery assembly of FIG. 4 in which lead plates are removed.
FIG. 6 is an exploded perspective view of the battery assembly of FIG. 5 in which a battery holder is disassembled.
FIG. 7 is a front view of the battery assembly shown in FIG. 4.
FIG. 8 is an enlarged exploded perspective view of a principal part of the battery assembly of FIG. 4.
FIG. 9 is an enlarged exploded perspective view of a principal part of the battery assembly of FIG. 4.
FIG. 10 is an enlarged sectional view of a principal part of the battery pack shown in FIG. 2.
FIG. 11 is a schematic sectional view showing a state in which an emission is exhausted from a secondary battery cell of a conventional battery pack.
FIG. 12 is a schematic sectional view showing a state in which an emission is exhausted from a secondary battery cell of the battery pack of the present invention.

### DESCRIPTION OF EMBODIMENT

Embodiments of the present invention may be specified by the following configurations and features.

In the battery pack according to another embodiment of the present invention, in the above embodiment, a lead opening window may extend in a second direction intersecting a first line linking centers of the first electrodes of the secondary battery cells adjacent to each other at a shortest distance. With the above configuration, since the lead opening window is provided extending in the second direction intersecting the first line, emissions moving along the first line can be allowed to pass through a lead opening window and can be exhausted to the outside.

In the battery pack according to still another embodiment of the present invention, in the above embodiment, the lead plate may include conductive parts on both sides of each of the lead opening windows. With the above configuration, by providing conductive parts on both sides of the lead opening windows opened in the lead plate, it is possible to gain an area of a conduction path lost by providing the lead opening window on the first line and to reduce electrical resistance of the lead plate.

In the battery pack according to yet another embodiment of the present invention, in the above embodiment, the insulation opening windows may be opened in a slit shape overlapping the lead opening windows.

In the battery pack according to a further embodiment of the present invention, in the above embodiment, the lead plate may include a plurality of laminated parts laminated on a surface of the battery holder, and a plurality of weld parts linked between the plurality of laminated parts and connected to the first electrodes, and the laminated part may include the lead opening windows.

In the battery pack according to a further embodiment of the present invention, in the above embodiment, the lead plate may be formed by folding a metal plate to alternately provide the plurality of laminated parts and the plurality of weld parts with a step difference with respect to the laminated parts. With the above configuration, by folding a metal plate, a plurality of laminated parts and a plurality of laminated parts can be simply and easily formed in a shape with a step difference.

In the battery pack according to a further embodiment of the present invention, in the above embodiment, the battery holder may be formed in a box shape in an outer shape, in which the first electrodes of the plurality of secondary battery cells are disposed on a first surface forming the box shape, and the battery holder may include a connecting window opened in the first surface to expose the first electrode, and an internal shape of the connecting window may be a shape that allows the weld part of the lead plate to be engaged. With the above configuration, by engaging the weld part of the lead plate into the connecting window of the battery holder, the lead plate can be disposed while the lead plate is positioned simply and easily in a predetermined position of the battery holder.

In the battery pack according to a further embodiment of the present invention, in the above embodiment, the battery pack may include a plurality of parallel units connected in parallel, each of the plurality of parallel units including the secondary battery cells arranged in parallel to each other, wherein the plurality of parallel units may be connected in series to each other to form a battery block including the plurality of secondary battery cells held by the battery holder and connected in series and parallel, and the lead plate may be an output lead plate connected to an output side of the battery block.

In the battery pack according to a further embodiment of the present invention, in the above embodiment, the battery holder may be formed in a box shape in an outer shape, including the plurality of secondary battery cells with the first electrodes disposed on a first surface forming the box shape, the battery holder may include a positioning rib for bringing an outer peripheral edge of the lead plate into contact with the first surface to be disposed in a predetermined position, and the positioning rib is used also as a control wall that suppresses moving of emissions exhausted from a safety valve of the first electrode. With the above configuration, by disposing the lead plate in a predetermined position of the battery holder via the positioning rib, and the positioning rib can be used also as a control wall to control movement of emissions exhausted from the safety valve of the first electrode.

In the battery pack according to a further embodiment of the present invention, in the above embodiment, the battery holder may be formed in a box shape in an outer shape, including the plurality of secondary battery cells with the first electrodes disposed on a first surface forming the box shape, the battery holder includes a positioning protrusion part protruding from the surface, on the first surface, the insulating plate forms a positioning hole into which the positioning protrusion part is inserted, and the insulating plate may be allowed to be positioned on the first surface via the positioning hole and the positioning protrusion part. The above-mentioned insulating plate allows the positioning hole and the positioning protrusion part to be fitted into each other, and can dispose the insulating plate in the predetermined position of the battery holder. In this way, the insulating plate disposed in the predetermined position of the battery holder can dispose the insulation opening window to an accurate position of the lead opening window.

Hereinafter, exemplary embodiments of the present invention are described with reference to the drawings. However, the exemplary embodiments described below are merely examples for giving a concrete form to the technical idea of the present invention, and therefore, the present invention is not limited to the following. Furthermore, members set forth in claims are never limited to members in the exemplary embodiments. In particular, a size, a material, a shape, relative arrangement, or the like, of the component members described in the exemplary embodiments is not intended to limit the scope of the present invention only thereto unless otherwise described but merely illustrative. Note here that a size, a positional relationship, or the like, of the members in the respective drawings may be exaggerated for clarifying the description. Furthermore, in the following description, the same or similar members are represented by the same names and reference symbols, and the detailed description thereof is appropriately omitted. Furthermore, as for each component of the present invention, one member may serve as a plurality of components by forming the plurality of components with the same member. On the contrary, a function of one member may be shared by the plurality of members.

A battery pack of the present invention can be used as a power source for electric devices such as a speaker, an electric cleaner, and power tools, as a backup power source for servers used for stationary power storage, as power source devices for homes, businesses, and factories, and further as electric power sources for driving assist bicycles, power sources for driving electric scooters, electric carts, or vehicles such as hybrid cars and electric cars. Hereinafter, as one exemplary embodiment of the present invention, a battery pack used for a power source for a wireless speaker is described.

### [First exemplary embodiment]

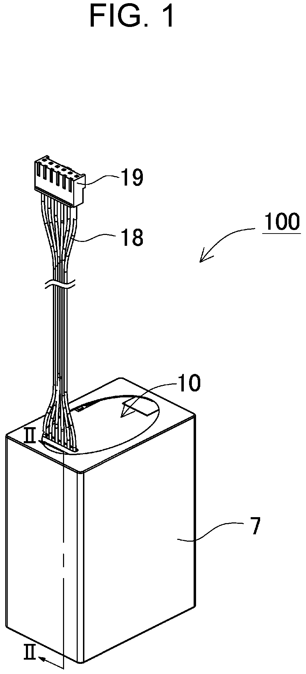

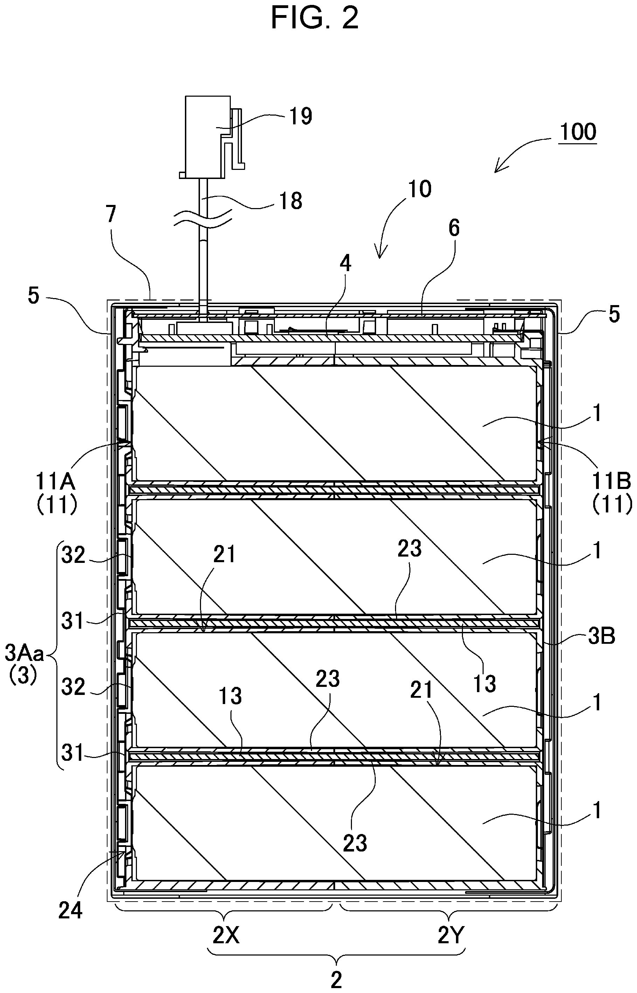

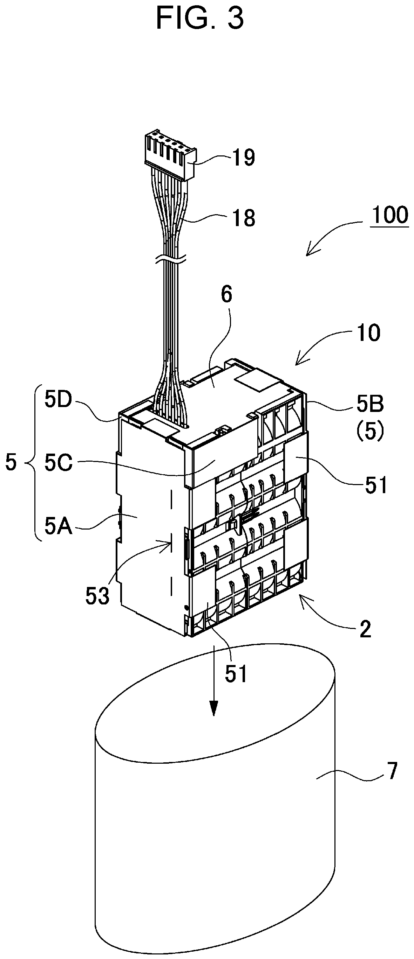

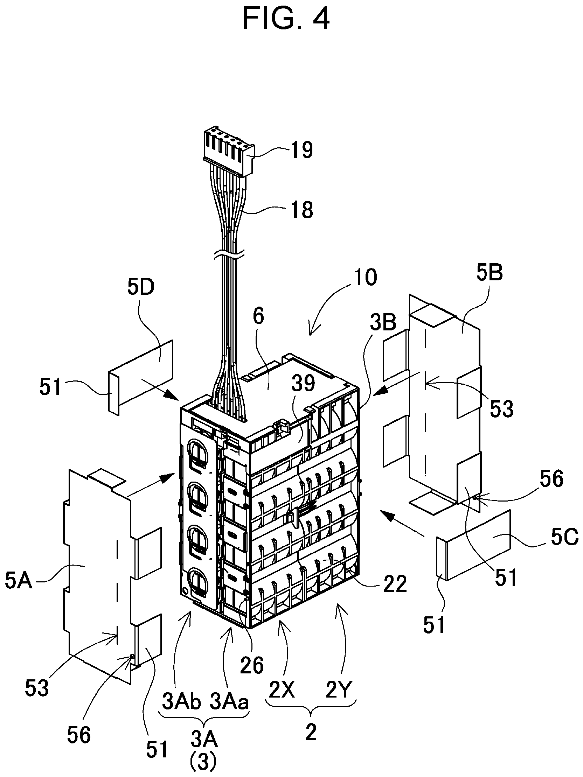

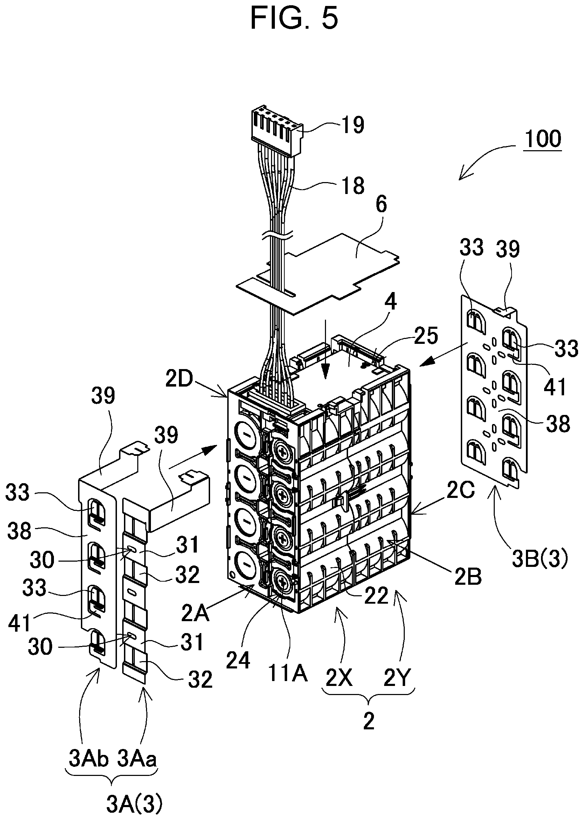

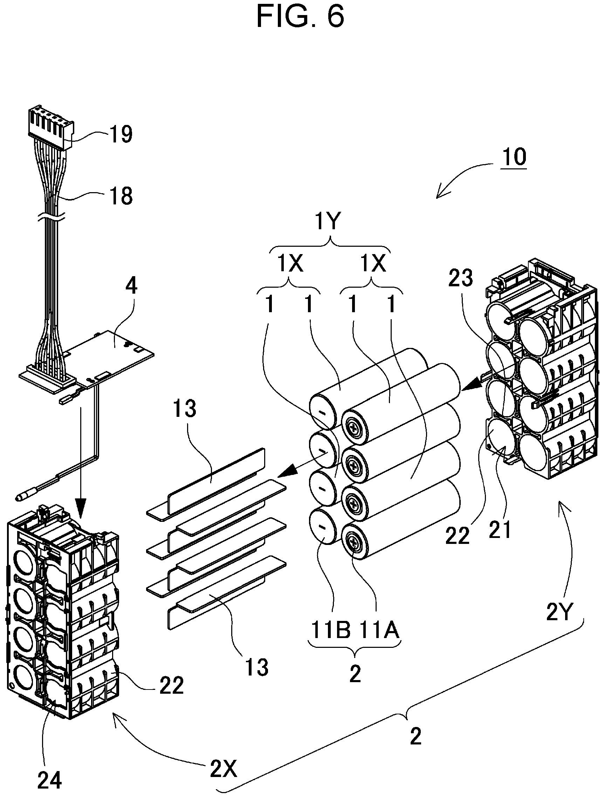

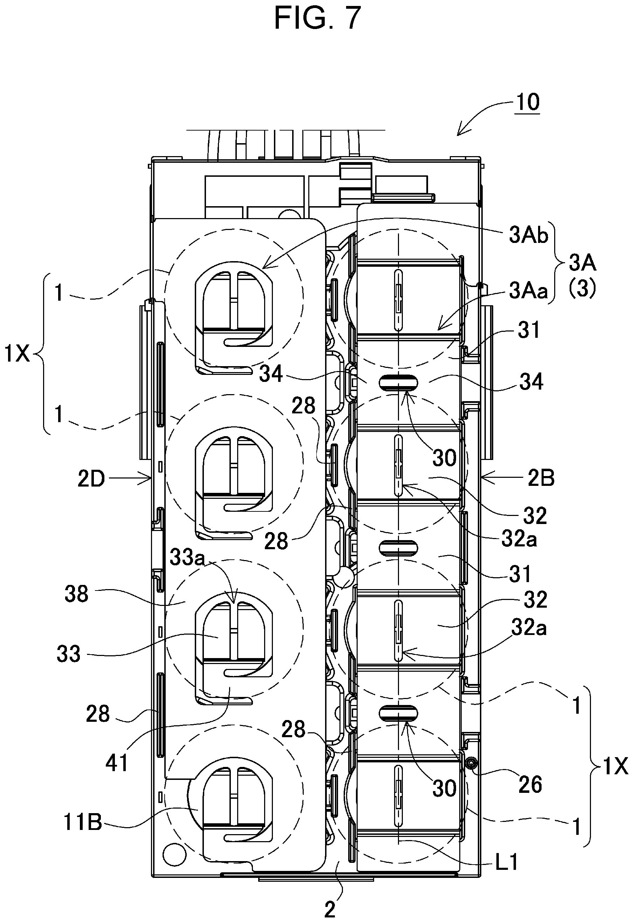

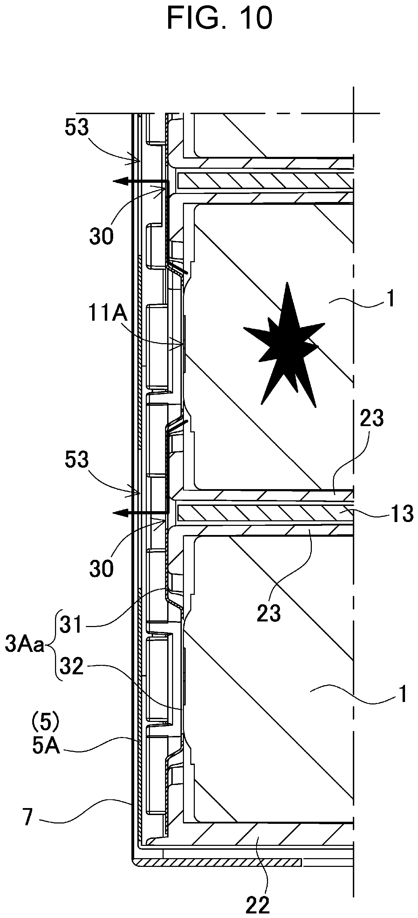

Battery pack 100 according to the first exemplary embodiment of the present invention is shown in FIG. 1 to FIG. 10. FIG. 1 is an external perspective view of a battery pack; FIG. 2 is a vertical sectional view of the battery pack shown in FIG. 1 taken along line II-II; FIG. 3 is a perspective view showing a manufacturing step of the battery pack of FIG. 1; FIG. 4 is an exploded perspective view of a battery assembly of the battery pack of FIG. 3; FIG. 5 is an exploded perspective view of a battery assembly of FIG. 4 in which a lead plate is removed; FIG. 6 is an exploded perspective view of the battery assembly of FIG. 5 in which the battery holder is disassembled; FIG. 7 is a front view showing the battery assembly shown in FIG. 4; FIGs. 8 and 9 are respectively an enlarged exploded perspective view of a principal part and an enlarged exploded sectional view of a principal part of the battery assembly shown in FIG. 4; FIG. 10 is an enlarged sectional view of a principal part of the battery pack of FIG. 2. Battery pack 100 shown in these drawings includes a plurality of secondary battery cells 1 arranged in parallel to each other in the longitudinal direction in which at least one of end surface electrodes 11 is first electrode 11A provided with a safety valve, battery holder 2 for holding a plurality of secondary battery cells 1, conductive lead plate 3 for connecting end surface electrodes 11 of adjacent secondary battery cells 1, and insulating plate 5 with insulation property for covering the surface of lead plate 3, and lead plate 3 includes lead opening windows 30 formed between first electrodes 11A of adjacent secondary battery cells 1, and insulating plate 5 includes insulation opening windows 53 formed in positions corresponding to lead opening windows 30.

### (Battery assembly 10)

In battery pack 100 shown in FIGs. 1 to 10, lead plate 3 is fixed to both end surfaces of battery holder 2 housing a plurality of secondary battery cells 1, and circuit board 4 is disposed on the top of battery holder 2 to form battery assembly 10. On the outer peripheral surface of battery assembly 10, a surface of lead plate 3 is covered with insulating plate 5, the upper surface of battery assembly 10 is covered with insulating member 6, and battery assembly 10 whose surface is insulated is covered with outer covering sheet 7.

### (Secondary battery cell 1)

Each secondary battery cell 1 is a cylindrical secondary battery cell whose outer covering can is cylindrical-shaped. An example of secondary battery cell 1 that can be used includes secondary battery cell 1 in which an electrode body is housed in a metal outer covering can, an electrolyte is filled, and an opening part of the outer covering can is hermetically closed with a sealing plate. The cylindrical secondary battery cell includes end surface electrodes 11 on both ends in the longitudinal direction. Secondary battery cell 1 includes electrodes as a positive electrode and a negative electrode, provided on a bottom surface as both end surfaces of the outer covering can and a center part of the sealing plate. Furthermore, in secondary battery cell 1, at least one of end surface electrodes 11 at both ends is first electrode 11A including a safety valve (not shown). Secondary battery cell 1 includes first electrode 11A provided with a safety valve is formed of protruded electrode disposed in a center part of the sealing plate. The other end surface electrode 11 as second electrode 11B includes a bottom surface electrode of the outer covering can. The safety valve is a member that opens when an internal pressure of the outer covering can is increased, and releases inside gas. Therefore, secondary battery cell 1 can use all types of secondary batteries that exhaust emissions of a gas lamp when an internal pressure is increased and a safety valve is opened. Note here that the safety valve is generally provided closer to a positive electrode, but in the present invention, a position at which the safety valve is provided is not limited to closer to the positive electrode, and may be at other positions, for example, closer to a negative electrode.

For such a secondary battery cell 1, a non-aqueous electrolyte secondary battery with high energy efficiency, such as a lithium-ion secondary battery, can be suitably used. However, in the battery pack of the present invention, the secondary battery cell is not necessarily specified to a lithium-ion secondary battery. Also, the secondary battery cell is not necessarily specified to a cylindrical battery.
For the secondary battery cells, all rechargeable batteries, for example, nickel hydrogen battery and nickel-cadmium battery, can be used.

### (Battery holder 2)

Battery holder 2 holds a plurality of secondary battery cells 1. Battery holder 2 of FIG. 2 holds a plurality of secondary battery cells 1 in parallel to each other in the longitudinal direction with end surface electrodes 11 of both ends disposed in the same plane. An outer shape of battery holder 2 is a box shape in which a plurality of secondary battery cells 1 is arranged in multiple stages and rows. Battery holder 2 of FIG. 6 is made of plastic molded into a shape with holding cylinder 22 in which each of the plurality of secondary battery cells 1 is disposed in a predetermined position. In battery holder 2, eight holding cylinders 22 are linked in parallel in four stages and two rows, and the inside of holding cylinders 22 is made to be approximately equal to the outer shape of secondary battery cell 1 to make storage space 21. Battery holder 2 of the drawings holds eight secondary battery cells 1 arranged in four stages and two rows, and are arranged vertically and horizontally. Battery holder 2 of the drawings includes eight secondary battery cells 1 arranged in a matrix so as to be in a left-right symmetrical position seen in front view. This structure is advantageous that battery holder 2 in which secondary battery cells 1 are arranged in multiple stages can be held in a stable standing position. The number and arrangement of secondary battery cells 1 are not limited to this configuration, and a structure may include seven or less or nine or more secondary battery cells 1. Furthermore, the number of stages and rows is not limited to four stages and two rows, and the number of stages and rows can be changed variously. In addition to matrix arrangement, secondary battery cells 1 may also be arranged in a staggered arrangement, alternating in each row. Battery holder 2 is made of a material with excellent insulation property and heat resistance, and is made of resin such as polycarbonate and ABS.

Battery holder 2 in FIG. 6 is divided into first holder 2X and second holder 2Y in the longitudinal direction of secondary battery cell 1. Battery holder 2 allows elongated secondary battery cells 1 to be inserted smoothly.
First holder 2X and second holder 2Y are manufactured separately by molding plastic, and are linked to each other in a state in which secondary battery cells 1 are inserted therein. First holder 2X and second holder 2Y are provided with cylindrical storage space 21 for inserting and arranging cylindrical secondary battery cells 1 in a predetermined position.
The internal shape of storage space 21 is approximately equal to the external shape of secondary battery cell 1, and precisely, the internal shape of storage space 21 is made to be slightly larger so that the secondary battery cell 1 can be smoothly inserted and disposed in a predetermined position. First holder 2X and second holder 2Y with this structure are linked to each other in a predetermined position via secondary battery cell 1, with both ends of cylindrical secondary battery cell 1 inserted therein. First holder 2X and second holder 2Y can be linked more precisely by making their facing surfaces to be a fitting structure, and are also linked in a predetermined position via non-melting plate 13, which will be described later.

Battery assembly 10 shown in FIGs. 2 and 6 includes non-melting plate 13 such as a mica plate inside partition wall 23 arranged between adjacent secondary battery cells 1. In battery holder 2 shown in the drawing, since secondary battery cells 1 are arranged in four stages and two rows, cross-shaped partition walls 23 are disposed vertically in eight secondary battery cells 1 arranged. vertically and horizontally. Partition wall 23 includes an insertion gap into which non-melting plate 13 inside is inserted. In partition wall 23, non-melting plate 13 such as a mica plate is inserted into this insertion gap. Battery assembly 10 can prevent thermal runaway from being induced in adjacent secondary battery cell 1 when thermal runaway and abnormal heat occur in any one of secondary battery cells 1.

Furthermore, battery holder 2 includes connecting windows 24 opening at positions facing end surface electrodes 11 of secondary battery cells 1 to expose end surface electrodes 11 and connect lead plate 3. Connecting window 24 that guides first electrode 11A, which is a protruded electrode, is larger than the outer shape of the protruded electrode, and has a size that allows the protruded electrode to be inserted inside. This connecting window 24 can be welded to lead plate 3 by arranging the protruded electrode inside, so that the step difference of first electrode 11A exposed from connecting window 24 is lowered, and lead plate 3 can be welded to first electrode 11A. Connecting window 24, disposed at a position facing second electrode 11B disposed on the bottom surface of the outer covering can, is opened in a size that allows welding piece 33 of lead plate 3 to be guided to second electrode 11B.

Furthermore, battery holder 2 is provided on the top with storage region 25 for storing circuit board 4. Battery holder 2 shown in FIG. 5 includes front, rear, left and right peripheral walls protruding from the top surface, and includes a recess inside the peripheral walls on four sides to form storage region 25 of circuit board 4. Battery holder 2 of FIG. 2 includes a gap with respect to the bottom surface of storage region 25, and circuit board 4 is disposed therein. Circuit board 4 shown in FIG. 5 is arranged in a predetermined position so that the outer peripheral shape is fitted into the inner peripheral shape of storage region 25. However, the battery holder may be directly fixed in the installation region of the circuit board by screwing or the like, or a board holder for holding the circuit board may be provided separately.

### (Lead plate 3)

Lead plate 3 electrically connects secondary battery cells 1 held by battery holder 2. Lead plate 3 is manufactured by press-molding a metal plate with excellent conductivity, and is fixed by welding to end surface electrodes 11 provided on the end surfaces of secondary battery cells 1 of battery holder 2. Battery assembly 10 shown in the drawing includes eight secondary battery cells 1 connected in series and in parallel via lead plates 3. In battery assembly 10 of FIG. 6, four secondary battery cells 1 disposed in two right and left rows and arranged in four stages vertically are connected in parallel to each other to form parallel unit 1X, and the right and left parallel units 1X are connected in series to each other to connect eight secondary battery cells 1 in four parallel and two series to form battery block 1Y. As shown in FIG. 5, battery assembly 10 includes two sets of parallel units 1X connected in series via intermediate lead plate 3B on third surface 2C of box-shaped battery holder 2. As shown in FIGs. 5 and 7, the output of parallel units 1X connected in series is connected to output lead plate 3A on first surface 2A of battery holder 2.

Output lead plate 3A includes, at an output side of battery block 1Y, first output lead plate 3Aa for connecting first electrodes 11A of the plurality of secondary battery cells 1 constituting parallel unit 1X, and second output lead plate 3Ab for connecting second electrodes 11B. First output lead plate 3Aa shown in the drawing is disposed at the right side of first surface 2A of battery holder 2 being box-shaped in an outer shape and connected to vertically adjacent first electrodes 11A. First output lead plate 3Aa shown in the drawing is formed in a shape in which laminated part 31 and weld part 32 are alternately connected. Laminated part 31 is laminated on the surface on the surface of battery holder 2 at the opening edge of connecting window 24, and weld part 32 is connected to first electrode 11A disposed on connecting window 24 in a stepped shape which is lower by a step than laminated part 31. First output lead plate 3Aa is folded so that a longitudinal sectional shape becomes a substantially oblong waveform shape by laminated part 31 and weld part 32 alternately linked to each other. In first output lead plate 3Aa, since first electrodes 11A of four secondary battery cells 1 are linked, four weld parts 32 are provided vertically, and laminated parts 31 are provided between weld parts 32 and in the outside, respectively. In the above-mentioned first output lead plate 3Aa, planar shapes of laminated part 31 and weld part 32 are rectangular shapes with equal width. By folding a metal plate with equal width, manufactures can be made simple and easy.

Laminated part 31 is disposed between adjacent first electrodes 11A, and includes lead opening window 30 opened in the center part. First output lead plate 3Aa includes lead opening window 30 opened in three laminated parts 31 provided between four weld parts 32. Lead opening window 30 is provided as an opening through which an emission exhausted from the safety valve of first electrode 11A of any of secondary battery cells 1 is allowed to pass and is exhausted to the outside. Laminated part 31 shown in the drawing is opened in an elliptical shape extending in a second direction intersecting the first line L1 linking the centers of first electrodes 11A of adjacent secondary battery cells 1 at a shortest distance. Lead opening window 30 can be made in, for example, an elliptical or an oval shape extending in the second direction. First output lead plate 3Aa including lead opening window 30 of this shape in laminated part 31 can allow an emission to pass reliably and to be exhausted to the outside when an emission such as gas is exhausted from a safety valve of first electrode 11A of any one of secondary battery cells 1. This is because by forming lead opening window 30 in the second direction that is a direction intersecting with respect to the first line L1 linking the centers of adjacent first electrodes 11A, emissions such as gas moving along the first line L1 can be reliably guided to lead opening window 30. Furthermore, laminated part 31 of the drawing includes conductive part 34 with a predetermined width on both sides of lead opening window 30 opened in the center part, so that an area of the conduction path lost by providing lead opening window 30 on first line L1 is gained.

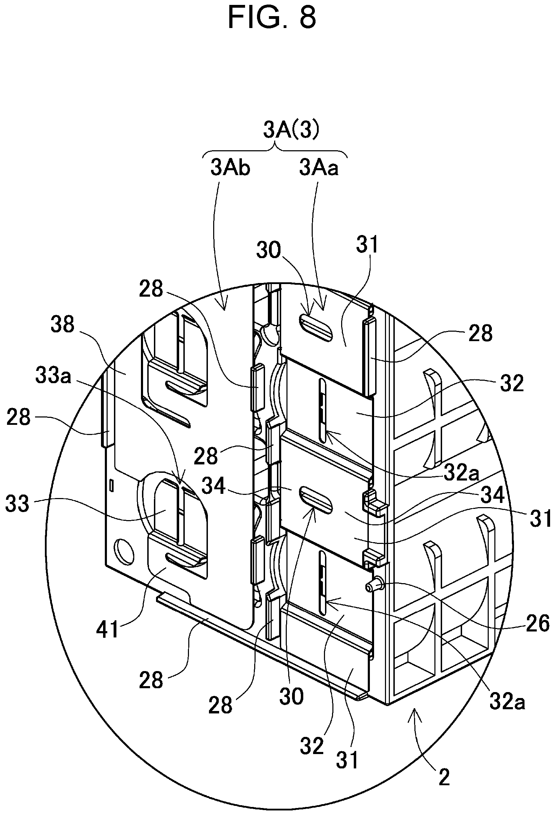

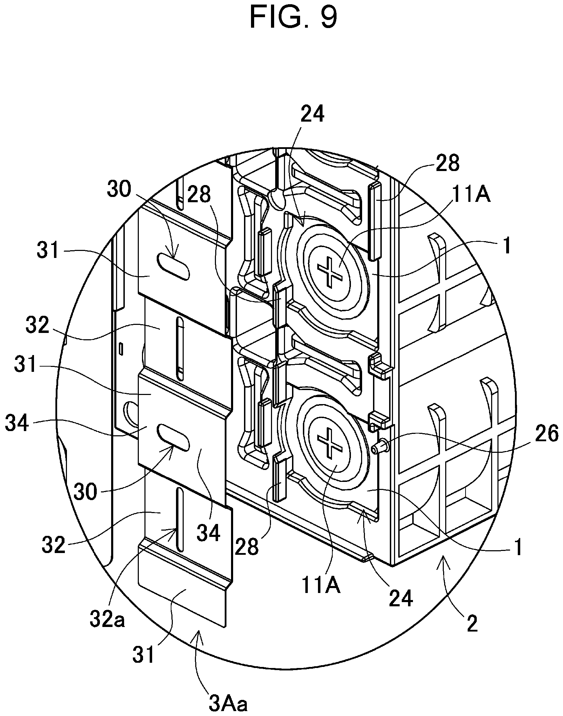

A planar shape of weld part 32 is a rectangular shape, thus allowing a surface contact with first electrode 11A over a wider area. In order to ensure that weld part 32, which is rectangular seen in plan view, is brought into contact with first electrode 11A exposed from connecting window 24, battery holder 2 shown in FIGs. 8 and 9 is molded in an internal shape in which a planar shape of connecting window 24 is a rectangular shape and an entire part of weld part 32 can be engaged. In this way, first output lead plate 3Aa, in which an entire part of weld part 32 is shaped in a flat-plate shape and the entire surface of first electrode 11A is closes is advantageous that emissions such as gas exhausted from the safety valve can be allowed to flow into laminated part 31, and can be exhausted from lead opening window 30.

Furthermore, plate-shaped weld part 32 includes slit 32a opened in the center part. Weld part 32 improves the reliability of welding by pressing a welding tool across slit 32a. Weld part 32 in the drawing includes slit 32a along the first line L1. This structure is advantageous that the welding tool can be pressed over a wide area on both sides of slit 32a to reliably weld the weld part to first electrode 11A. However, the slit may be provided in a direction intersecting the first line L1.

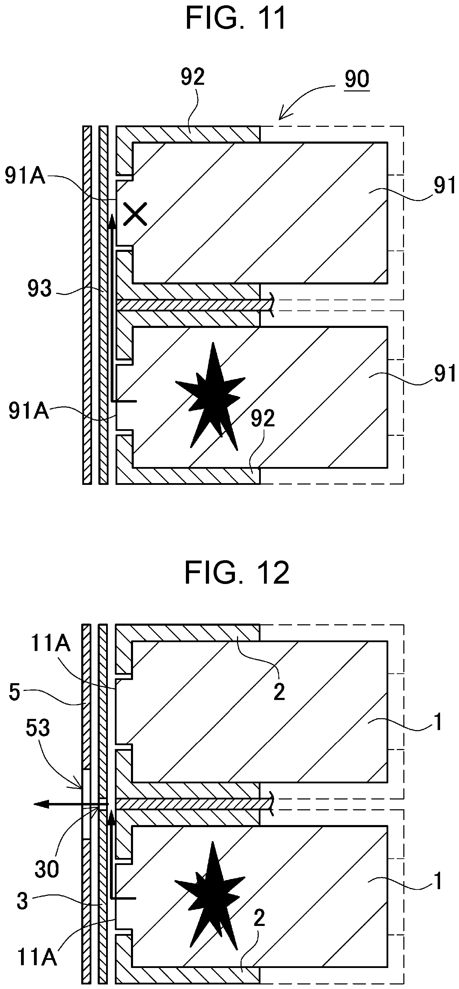

Herein, one focus point of the present invention is described. In lead plate 3 that connects first electrodes 11A adjacent to each other, it is required to suppress moving of emissions such as gas exhausted from the safety valve of one of secondary battery cells 1 to first electrode 11A of other secondary battery cell 1 along lead plate 3 and causing adverse effects. As shown in the schematic sectional view of FIG. 11, in a conventional battery pack 90 in which a large number of secondary battery cells 91 are held by battery holder 92 made of resin, battery holder 92 is divided into two parts, secondary battery cell 91 is inserted into the cylindrical body formed in each divided holder, and secondary battery cell 91 is held from the left and right sides. In such a battery pack 90, it was considered that if an unsafe event occurs in any one of secondary battery cells 91 (the upper secondary battery cell in FIG. 11), as shown by the arrow in FIG. 11, an emission such as high-temperature gas, flame, and electrolyte, released from the safety valve provided on first electrode 91A of cell 91 moves along lead plate 93 to other adjacent secondary battery cells 91, causing damage and causing fire.

On the contrary, in battery pack 100 according to this exemplary embodiment, as shown in FIG. 12, in lead plate 3 facing first electrode 11A provided with a safety valve as mentioned above, by providing lead opening window 30 between adjacent first electrodes 11A, an emission exhausted from the safety valve is allowed to flow as shown by the arrow in FIG. 12, thereby minimizing damage to other secondary battery cells 1. Furthermore, as described in detail later, insulation opening window 53 is formed in insulating plate 5 laminated on the surface of lead plate 3 at a position corresponding to lead opening window 30. This can allow the emission that has passed through lead opening window 30 to reliably pass to insulation opening window 53 and to be exhausted to the outside promptly.

Intermediate lead plate 3B includes plate-like laminated part 38 that is disposed over the entire surface of third surface 2C of battery holder 2 and is connected to end surface electrodes 11 of secondary battery cells 1 adjacent vertically and horizontally. Intermediate lead plate 3B connects vertically adjacent secondary battery cells 1 in parallel via plate-like laminated part 38 on third surface 2C of battery holder 2, and connects horizontally adjacent secondary battery cells 1 to each other in series. Intermediate lead plate 3B includes welding piece 33 welded to the end surface electrode of secondary battery cell 1 on plate-like laminated part 38. Welding piece 33 extends from plate-like laminated part 38 with a step difference, even when there is a height difference between the surface of battery holder 2 and the surface of end surface electrode 11, welding piece 33 is brought into surface contact with the surface of end surface electrode 11, thus enhancing the reliability of welding. Furthermore, each welding piece 33 includes slit 33a formed therein. By pressing a welding tool across slit 33a, the reliability of welding is enhanced. Welding piece 33 of the drawing is divided into a part of the weld part, and slit 33a is provided between them, but the welding piece can be provided with a slit by opening an elongated hole. In this embodiment, since intermediate lead plate 3B is connected in series to adjacent secondary battery cell 1 vertically, this site of plate-like laminated part 38 connected in series is formed in a plate shape without a step difference. Then, in intermediate lead plate 3B, a space around welding piece 33 connected to first electrode 11A of secondary battery cell 1 becomes a path in which emissions exhausted from the safety valve of first electrode 11A is exhausted to the outside. Note here that apart from the exhausting path, an opening for exhausting the emission exhausted from the safety valve of the first electrode 11A to the outside at a position corresponding to a position between the upper and lower and/or left and right adjacent secondary battery cells 1 of intermediate lead plate 3B.

Furthermore, second output lead plate 3Ab also includes welding piece 33 connected to second electrode 11B on plate-like laminated part 38 that is plate-shaped, which connects second electrodes 11B of adjacent secondary battery cells 1. In this structure, in second output lead plate 3Ab and intermediate lead plate 3B, welding piece 33 connected to second electrode 11B is connected to plate-like laminated part 38 via the elongated fusing part 41, and fusing part 41 is fused off in a state in which an overcurrent flows, thus reliably cutting off secondary battery cells 1 from lead plate 3.

Furthermore, lead plate 3 includes connecting terminal part 39, which protrudes upward, to be connected to circuit board 4. Connection terminal part 39 drawn from output lead plate 3A is connected to circuit board 4 and supplies an output of battery block 1Y to circuit board 4. Connecting terminal part 39 drawn from intermediate lead plate 3B is connected to circuit board 4, and supplies the intermediate voltage of battery block 1Y to circuit board 4.

Lead plate 3 described above can be disposed at a predetermined position on battery holder 2 via a positioning mechanism. Battery holder 2 shown in FIGs. 7 to 9 includes a plurality of positioning ribs 28 protruding from the surface, which is integrally molded on first surface 2A, and disposes a plurality of positioning ribs 28 as a positioning mechanism to hold lead plate 3 in a predetermined position. Lead plate 3 is positioned at a predetermined position on battery holder 2 with its outer peripheral edge arranged along positioning ribs 28. Lead plate 3 disposed in a predetermined position is fixed at the predetermined position by welding weld part 32 or welding piece 33 to end surface electrode 11. Furthermore, in battery holder 2 shown in FIGs. 7 to 9, some of the positioning ribs 28 function as control walls that suppress movement of emissions exhausted from the safety valve of first electrode 11A.

### (Circuit board 4)

On circuit board 4, electronic circuits such as a voltage detection circuit for detecting a total potential of battery block 1Y to which secondary battery cells 1 are connected in series or in parallel or an intermediate potential, a control circuit for controlling charging and discharging, and a protection circuit are mounted. Circuit board 4 is formed in an oblong shape and is disposed in storage region 25 provided on the top of battery holder 2.

### (Insulating plate 5)

Insulating plate 5 is laminated on the surface of lead plate 3 fixed to battery holder 2 to cover and insulate lead plate 3. Insulating plate 5, which is made of resin or paper, is inexpensive, and easy to handle, and has excellent heat resistance and flame retardancy against heat of emissions such as gas exhausted from secondary battery cell 1, is preferably used. As such an insulating plate, for example, aramid paper (Nomex [registered trademark] manufactured by DuPont) or the like can be used. Insulating plate 5 shown in FIG. 4 includes first insulating plate 5A disposed to first surface 2A of battery holder 2 that is box-shaped in outer shape and covering output lead plate 3A, second insulating plate 5B disposed on third surface 2C of battery holder 2 to cover intermediate lead plate 3B, third insulating plate 5C disposed on second surface 2B of battery holder 2 to cover connecting terminal part 39 of first output lead plate 3Aa, and fourth insulating plate 5D disposed on fourth surface 2D of battery holder 2 to cover connecting terminal part 39 of second output lead plate 3Ab.

Third insulating plate 5C includes folded piece 51 on one side of a main body part covering connecting terminal part 39 of first output lead plate 3Aa disposed on second surface 2B of battery holder 2, and this folded piece 51 is disposed on the surface of first output lead plate 3Aa disposed on first surface 2A of battery holder 2. Fourth insulating plate 5D includes folded piece 51 on one side of a main body part covering connecting terminal part 39 of second output lead plate 3Ab disposed on fourth surface 2D of battery holder 2, and this folded piece 51 is disposed on the surface of plate-like laminated part 38 of second output lead plate 3Ab disposed on first surface 2A of battery holder 2. First insulating plate 5A includes a main body part covering the entire part of first surface 2A of battery holder 2 on which third insulating plate 5C and fourth insulating plate 5D are disposed, and folded pieces 51 linked to both sides of the main body part, and, as shown in FIG. 3, these folded pieces 51 are laminated and disposed on the surface of second insulating plate 5B disposed on second surface 2B of battery holder 2 and fourth insulating plate 5D disposed on fourth surface 2D. Second insulating plate 5B includes a main body part covering the entire part of third surface 2C of battery holder 2, and folded piece 51 linked to the both sides of the main body part, and these folded pieces 51 are disposed on the surfaces of second surface 2B and fourth surface 2D of battery holder 2.

First insulating plate 5A includes insulation opening windows 53 in positions corresponding to lead opening windows 30 provided on first output lead plate 3Aa, so that an emission exhausted from the safety valve of first electrode 11A can be exhausted from lead opening window 30 to the outside through insulation opening window 53 of insulating plate 5 promptly. First insulating plate 5A shown in FIG. 4 includes insulation opening windows 53 extending in the vertical direction in regions facing three lead opening windows 30 formed in first output lead plate 3Aa, that is, in three places in the vertical direction. Each insulation opening window 53 is opened as a slit hole with a total length several times as the vertical width of lead opening window 30 so that emission exhausted into lead opening window 30 can be allowed to promptly pass through and be exhausted to the outside. First insulating plate 5A includes slit-shaped lead opening windows 30 in three vertical places on first line L1 linking the centers of first electrodes 11A. In this way, by providing insulation opening windows 53 in positions facing lead opening windows 30 provided on lead plate 3, as shown by the arrow in FIG. 10, emissions such as a gas exhausted from the safety valve of first electrode 11A can be promptly guided from lead opening window 30 to insulation opening window 53 and exhausted to the outside. However, the shape, number, and arrangement of insulation opening windows 53 provided in insulating plate 5 are not limited to the above examples, and can be modified variously so that emissions flowing into lead opening window 30 can be promptly exhausted to the outside. Note here that insulation opening window 53 is opened in a shape of a slit so as not to impair the insulating functions of first insulating plate 5A and second insulating plate 5B.

Furthermore, second insulating plate 5B shown in the drawing is provided with insulation opening windows 53 in positions facing first electrodes 11A connected by intermediate lead plate 3B, so that the emissions exhausted from the safety valves of first electrodes 11A can be allowed to pass through insulation opening window 53 of insulating plate 5 and to be exhausted to the outside. Second insulating plate 5B shown in FIG. 4 includes slit-shaped insulation opening windows 53 extending in the vertical direction in four places in the region facing welding piece 33 of intermediate lead plate 3B connected to first electrode 11A, that is, in the vertical direction.

The above insulating plate 5 can be disposed in a predetermined position on battery holder 2 in a fitting structure. In battery holder 2 shown in Figs. 8 and 9, a plurality of positioning protrusion parts 26 protruding from the surfaces are integrally molded on first surface 2A and third surface 2C. Insulating plate 5 includes a plurality of positioning holes 56 into which positioning protrusion parts 26 are inserted. Insulating plate 5 is disposed in a predetermined position on battery holder 2 with the positioning hole 56 guided to positioning protrusion parts 26 to precisely cover the surface of the lead plate, and dispose insulation opening windows 53 in accurate positions.

### (Outer covering sheet 7)

Battery assembly 10 in which insulating plate 5 is disposed on a surface of lead plate 3 and a surface of circuit board 4 is covered with insulating member 6 is covered with outer covering sheet 7, as shown in FIG. 1. Outer covering sheet 7, as shown in FIG. 3, is a heat-shrinkable bag or tube that is covered by heat-shrinking with battery assembly 10 housed inside. For such outer covering sheet 7, resin such as PET, which is preferably excellent in insulation property and stability, can be used. In particular, a shrink tube made of PET resin is preferable as a heat shrink tube because it is inexpensive. Outer covering sheet 7 is melted by emissions such as high temperature gas exhausted from a safety valve of first electrode 11A of secondary battery cell 1, and promptly exhausts emissions to the outside of battery pack 100.

### (Leader wire 18, connector 19)

In addition, in battery pack 100 shown in FIGs. 1 to 6, a plurality of leader wires 18 is connected to circuit board 4 and drawn out from battery assembly 10 to the outside. Leader wire 18 includes positive and negative power lines and signal lines, and is directly connected to a connector of a device in which battery pack 100 is to be set. The plurality of leader wires 18 includes one end connected to circuit board 4 and the other end to which connector 19 is connected.

Battery pack 100 described above is built in a main body of an electrical device such as a speaker and is used as a power source. Battery pack 100 supplies electric power to the main body device via leader wire 18 drawn out to the outside, or receives power from the main body device to charge the built-in secondary battery cell 1. Leader wire 18 drawn out from battery pack 100 is connected to the connection connector at the main body via output connector 19 connected to the tip end to supply electric power.

### INDUSTRIAL APPLICABILITY

A battery pack according to the present invention can be suitably used as a power source of electrical devices such as a wireless speaker, an electrically-driven cleaner, and electrically-driven tools. Furthermore, the battery pack can also be suitably used for applications such as power supply devices for moving objects such as assist bicycles and electric carts.

### REFERENCE MARKS IN THE DRAWINGS

100 battery pack
1 secondary battery cell
1X parallel unit
1Y battery block
2 battery holder
2X first holder
2Y second holder
2A first surface
2B second surface
2C third surface
2D fourth surface
3 lead plate
3A output lead plate
3Aa first output lead plate
3Ab second output lead plate
3B intermediate lead plate
4 circuit board
5 insulating plate
5A first insulating plate
5B second insulating plate
5C third insulating plate
5D fourth insulating plate
6 insulation member
7 outer covering sheet
10 battery assembly
11 end surface electrode
11A first electrode
11B second electrode
13 non-melting plate
18 leader wire
19 connector
21 storage space
22 holding cylinder
23 partition wall
24 connecting window
25 storage region
26 positioning protrusion part
28 positioning rib
30 lead opening window
31 laminated part
32 weld part
32a slit
33 welding piece
33a slit
34 conductive part
38 plate-like laminated part
39 connecting terminal part
41 fusing part
51 folded piece
53 insulation opening window
56 positioning hole
90 battery pack
91 secondary battery cell
91A first electrode
92 battery holder
93 lead plate
L1 first line

## Claims

1. A battery pack comprising:
a plurality of secondary battery cells arranged in parallel to each other in a longitudinal direction, each of the plurality of secondary battery cells including end surface electrodes each on both ends of the secondary battery cell, at least one of the end surface electrodes being a first electrode including a safety valve;
a battery holder for holding the plurality of secondary battery cells;
a lead plate with conductivity for connecting the end surface electrodes of secondary battery cells adjacent to each other among the plurality of secondary battery cells; and
an insulating plate with insulation property and covering a surface of the lead plate,
wherein the lead plate includes lead opening windows each between the first electrodes in the secondary battery cells adjacent to each other, and the insulating plate includes insulation opening windows in positions corresponding to the lead opening windows.

2. The battery pack according to claim 1, wherein
each of the lead opening windows extends in a second direction intersecting a first line linking centers of the first electrodes of the secondary battery cells adjacent to each other at a shortest distance.

3. The battery pack according to claim 2, wherein
the lead plate includes conductive parts on both sides of each of the lead opening windows.

4. The battery pack according to claim 1, wherein
the insulation opening windows are opened in a slit shape overlapping the lead opening windows.

5. The battery pack according to claim 1, wherein
the lead plate includes a plurality of laminated parts laminated on a surface of the battery holder, and a plurality of weld parts linked between the plurality of laminated parts and connected to the first electrodes, and the laminated parts include the lead opening windows.

6. The battery pack according to claim 5, wherein
the lead plate is formed by folding a metal plate to alternately provide the plurality of laminated parts and the plurality of weld parts with a step difference with respect to the laminated parts.

7. The battery pack according to claim 6, wherein
an outer shape of the battery holder is a box shape, in which the first electrodes of the plurality of secondary battery cells are disposed on a first surface of the box shape,
the battery holder includes a connecting window opened in the first surface to expose the first electrode, and
an internal shape of the connecting window is a shape that allows the weld part of the lead plate to be engaged.

8. The battery pack according to any one of claim 1 to claim 7, comprising:
a plurality of parallel units connected in parallel, each of the plurality of parallel units including the secondary battery cells arranged in parallel to each other,
wherein the plurality of parallel units is connected in series to each other to form a battery block including the plurality of secondary battery cells held by the battery holder and connected in series and parallel, and
the lead plate is an output lead plate connected to an output of the battery block.

9. The battery pack according to any one of claim 1 to claim 7,
wherein
an outer shape of the battery holder is a box shape, in which the first electrodes of the plurality of secondary battery cells are disposed on a first surface of the box shape,
the battery holder includes a positioning rib for bringing an outer peripheral edge of the lead plate into contact with the first surface to be disposed in a predetermined position, and
the positioning rib is used also as a control wall that suppresses moving of emissions exhausted from a safety valve of the first electrode.

10. The battery pack according to any one of claim 1 to claim 7, wherein
an outer shape of the battery holder is a box shape, in which the first electrodes of the plurality of secondary battery cells are disposed on a first surface of the box shape,
the battery holder includes a positioning protrusion part protruding from the surface of the battery holder, on the first surface,
the insulating plate defines a positioning hole into which the positioning protrusion part is inserted, and
the insulating plate is allowed to be positioned on the first surface via the positioning hole and the positioning protrusion part.
